(19) Europäisches Patentamt
European Patent Office
Office européen des brevets

(11) **EP 3 126 914 B1**

(12) **FASCICULE DE BREVET EUROPEEN**

(45) Date de publication et mention
de la délivrance du brevet:
**06.05.2020 Bulletin 2020/19**

(21) Numéro de dépôt: **15713520.3**

(22) Date de dépôt: **02.04.2015**

(51) Int Cl.:
***G04B 19/00*** *(2006.01)*

(86) Numéro de dépôt international:
**PCT/EP2015/057395**

(87) Numéro de publication internationale:
**WO 2015/150552 (08.10.2015 Gazette 2015/40)**

(54) **PROCEDE DE FABRICATION D'UN COMPOSANT HORLOGER POURVU D'UN INSERT EN MATIERE COMPOSITE, COMPOSANT HORLOGER ET PIECE D'HORLOGERIE ASSOCIES**

VERFAHREN ZUR HERSTELLUNG EINER UHRENKOMPONENTE MIT EINEM EINSATZ AUS EINEM VERBUNDMATERIAL UND ZUGEHÖRIGE UHRENKOMPONENTE UND UHR

METHOD FOR PRODUCING A TIMEPIECE COMPONENT PROVIDED WITH AN INSERT MADE OF A COMPOSITE MATERIAL, AND ASSOCIATED TIMEPIECE COMPONENT AND TIMEPIECE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2014 EP 14163597**

(43) Date de publication de la demande:
**08.02.2017 Bulletin 2017/06**

(73) Titulaire: **ROLEX SA**
**1211 Genève 26 (CH)**

(72) Inventeurs:
• **ISSARTEL, Jean-Paul**
**74380 Cranves-Sales (FR)**
• **OLIVEIRA, Alexandre**
**74800 Amancy (FR)**

(74) Mandataire: **Moinas & Savoye SARL**
**19A, rue de la Croix-d'Or**
**1204 Genève (CH)**

(56) Documents cités:
**EP-A1- 2 380 864          WO-A1-2013/135703**
**WO-A1-2013/178412**

• **ZEHETNER J ET AL: "Facilitating the fabrication of micron scale composite polymer inlays in ceramics substrates using femtosecond pulse laser ablation technique", 12TH CONFERENCE ON LASER ABLATION; OCTOBER 6 - 11, 2013; ISCHIA (ITALY) , 6 octobre 2013 (2013-10-06), page 1, XP002734040, Extrait de l'Internet: URL:http://www.fhv.at/media/pdf/forschung/ mikrotechnik/publikationen/2013/cola2013 [extrait le 2013-10-06]**

**Description**

La présente invention concerne un procédé de fabrication d'un composant horloger pourvu d'un insert.

Dans le domaine de l'horlogerie, il est connu de réaliser des éléments d'habillage d'un composant horloger qui incorporent des inserts en matière composite, par exemple afin de former des graduations, une dénomination commerciale, un sigle de marque ou autre élément de décor. La matière composite comprend par exemple des agents liants et des particules de céramique. Elle peut optionnellement être chargée en pigments, en matière luminescente ou autre matériau fonctionnel. Le composant horloger incrusté peut être un boîtier, une lunette, un cadran, un bracelet, un composant d'un mouvement horloger, etc...Il est réalisé en un matériau de substrat, tel qu'une céramique, un alliage métallique ou du saphir.

Un procédé connu de fabrication d'un tel composant horloger incrusté comprend d'abord la formation d'un corps à partir d'un matériau de substrat en céramique, par exemple par frittage d'un corps vert préformé. Une cavité est ensuite formée dans une face du corps, par exemple par ablation laser, et remplie d'une matière composite. Celle-ci est ensuite polymérisée par chauffage afin d'obtenir un matériau d'insert ayant une dureté suffisante. Enfin, le procédé comprend une étape de finition par polissage, lors de laquelle on élimine le surplus de matière composite et on donne un bel aspect à la face du corps incrustée.

L'adhésion entre le matériau de substrat et la matière composite à l'intérieur de la cavité est généralement problématique, notamment lors de la polymérisation qui induit un retrait de la matière composite.

Une solution connue pour améliorer l'adhésion entre le matériau de substrat et la matière composite consiste à modifier l'état de surface du fond de la cavité, comme divulgué dans le document WO2013178412 A1 par exemple, ou encore en formant un réseau régulier de micro-cônes par une technique d'ablation laser à impulsion femtoseconde (« Facilitating the fabrication of micron scale composite polymer inlays in ceramics substrates using femtosecond pulse laser ablation technique » J. Zehetner, S. Stroj, G. Zanghellini ; 12th Conférence on Laser Ablation, 6-11.10.2013, Ischia, Italy).

La présente invention vient encore améliorer la situation.

A cet effet, l'invention concerne un procédé de fabrication d'un composant horloger pourvu d'un insert en matière composite, comprenant les étapes successives suivantes :

- une étape de formation d'un corps pourvu d'une cavité sur une face dudit corps ;
- une étape de traitement lors de laquelle on forme au moins une zone d'adhésion renforcée sur ledit corps ;
- une étape de dépôt de matière composite lors de laquelle on remplit la cavité et on recouvre la zone d'adhésion renforcée, avec ladite matière composite ;
- une étape de polymérisation de la matière composite ;

caractérisé en ce que ladite zone d'adhésion renforcée est, au moins partiellement, extérieure à la cavité.

La zone d'adhésion renforcée a pour fonction d'assurer un meilleur accrochage de la matière au corps du composant horloger. Selon l'invention, l'adhérence d'une zone du corps qui est située à l'extérieur de la cavité est renforcée. Il s'agit par exemple d'une zone de la face du corps comportant la cavité, qui s'étend à proximité de celle-ci. Lors de l'ajout de matière composite, on remplit la cavité en faisant déborder la matière de manière à venir recouvrir la zone d'adhésion renforcée. Lors de la polymérisation, grâce à l'accrochage amélioré de la matière composite au niveau de cette zone extérieure, le retrait du composite est fortement limité.

Selon un mode de réalisation particulier, la zone d'adhésion renforcée est obtenue par modification de l'état de surface d'une zone surfacique du corps de manière à obtenir une zone de texture d'accroche renforcée.

Selon l'invention, l'état de surface, en particulier la texture, d'une zone surfacique du corps du composant horloger est modifié de manière à renforcer l'adhérence de cette zone.

Avantageusement, le procédé comprend une étape de finition, lors de laquelle on élimine un surplus de matière composite et on supprime la zone d'adhésion renforcée extérieure à la cavité.

L'excédent de matière composite déposée, ayant notamment débordé hors de la cavité, est ensuite éliminé, par exemple par polissage. On fait également disparaître, par exemple par polissage également, la zone extérieure de texture d'accroche renforcée.

Avantageusement, lors de l'étape de traitement, on forme au moins une zone d'adhésion renforcée qui s'étend à l'intérieur de la cavité, notamment sur au moins une partie du fond de la cavité et/ou sur au moins une partie des parois latérales de la cavité.

La ou les zones d'adhésion renforcée intérieures peuvent s'étendre sur au moins une partie du fond de la cavité et/ou sur au moins une partie des parois latérales de la cavité.

Avantageusement, la zone d'adhésion renforcée extérieure est positionnée au bord de la cavité.

La zone d'adhésion renforcée extérieure peut entourer la totalité de la cavité, ou bien occuper une ou plusieurs portions discontinues du pourtour de la cavité. Dans le premier cas, l'accrochage est optimal. Dans le second cas, l'étape de traitement et l'étape de finition sont facilitées et leurs durées sont réduites.

Le procédé peut avantageusement comprendre tout ou partie des caractéristiques additionnelles suivantes :

- la zone d'adhésion renforcée extérieure présente une largeur, perpendiculairement au bord de la cavité, d'au moins 50 μm ;
- l'étape de traitement utilise des rayonnements laser femtoseconde ;
- lors de l'étape de traitement, la zone à traiter, ou zone cible, est balayée par un faisceau laser avec une vitesse de balayage laser selon une direction longitudinale et un pas de balayage laser selon une direction latérale, la vitesse et le pas de balayage définissant respectivement un taux de recouvrement longitudinal supérieur à 20% et strictement inférieur à 100% et un taux de recouvrement latéral strictement supérieur à 0% et strictement inférieur à 100% ;
- la vitesse de balayage laser est comprise entre 10 et 3500 mm/s, de préférence entre 500 et 1000 mm/s ;
- le pas de balayage laser est compris entre 0,001 et 0,02 mm, de préférence entre 0,001 et 0,005 mm ;
- on effectue sur la zone à traiter deux balayages laser respectivement définis par deux directions longitudinales de balayage distinctes qui sont séparées l'une de l'autre par un angle supérieur ou égal à 10°, notamment un angle égal ou sensiblement égal à 90° ;
- la profondeur de relief de la texture d'accroche renforcée est comprise entre 0,2 et 20 microns ;
- la texture d'accroche renforcée présente un écart moyen de rugosité $R_a$ compris entre 0,4 et 0,6 microns ;
- la texture d'accroche renforcée présente une hauteur moyenne de profil $R_z$ comprise entre 2 et 4 microns ;
- le corps pourvu de ladite cavité est obtenu par injection d'un matériau dans un moule ;
- le corps est constitué de l'un des matériaux du groupe comportant :

     o une céramique, notamment une céramique à base de zircone ou d'alumine,
     o un alliage métallique, notamment un acier (par exemple l'acier 904L), un alliage cuivreux (par exemple du laiton), un alliage d'or (par exemple un alliage d'or 18ct) ou encore un alliage de Pt (par exemple un alliage de Pt950), et
     o du saphir ;

- le composant horloger est l'un des éléments du groupe comportant une lunette, une boîte, un élément de bracelet, une couronne, un cadran, un élément de mouvement horloger et une ébauche de mouvement horloger.

L'invention concerne aussi :

- un composant comportant un insert en matière composite, logé dans une cavité, caractérisé en ce qu'il comporte au moins une surface d'adhésion renforcée de la matière composite s'étendant au moins partiellement à l'extérieur de la cavité ; et
- un composant horloger comportant un insert en matière composite, logé dans une cavité, caractérisé en ce que ladite cavité comporte au moins une surface d'adhésion renforcée s'étendant sur au moins une partie du fond de la cavité et sur au moins une partie des flancs de la cavité.

L'invention concerne enfin une pièce d'horlogerie comportant l'un au moins des composants horlogers définis ci-dessus.

L'invention sera mieux comprise à l'aide de la description suivante d'un mode de réalisation particulier du procédé de fabrication d'un composant horloger comportant un insert, en référence aux dessins annexés sur lesquels :

- La figure 1 représente une cavité du composant horloger, obtenu par exemple après moulage par injection d'un corps vert céramique et avant traitement de frittage de celui-ci ;
- La figure 2 représente la cavité du composant horloger de la figure 1 après réalisation d'une zone de texture d'accroche renforcée ;
- La figure 3 représente la cavité de la figure 1 après remplissage avec une matière composite ;
- La figure 4 représente la cavité de la figure 1 après finition ;
- La figure 5 représente un organigramme des étapes du procédé ;
- La figure 6 représente une vue, agrandie au microscope électronique à balayage, de la texture d'accroche renforcée ;
- La figure 7 représente une partie d'une lunette 7 avec un insert 6, fabriquée par le procédé de la figure 5.

Le procédé de l'invention permet de fabriquer un composant horloger 7 pourvu d'un ou plusieurs inserts 6 en matière composite.

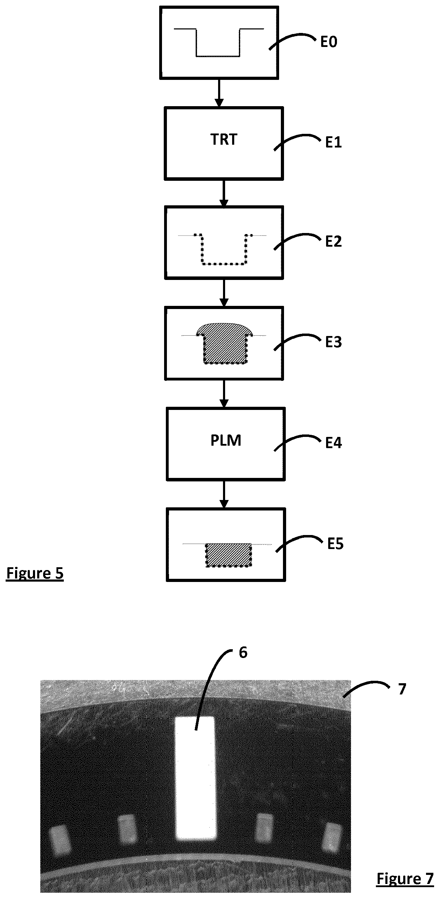

Le composant horloger 7 peut être, de façon non exhaustive, l'un des éléments de pièce d'horlogerie suivants : une lunette, une boîte, un élément de bracelet, une couronne, un cadran, un élément ou composant de mouvement horloger et une ébauche de mouvement horloger. A titre d'exemple purement illustratif, on a représenté sur la figure 7, une partie d'une lunette 7 comportant une graduation 6 incrustée.

Le composant 7 est réalisé à partir d'un matériau de substrat pouvant être l'un de ceux de la liste ci-dessous, qui n'est toutefois pas exhaustive :

- une céramique par exemple à base de zircone, d'alumine ou d'un autre type ;
- un alliage métallique, entre autre tel qu'un acier comme par exemple l'acier 904L ou encore tel qu'un alliage cuivreux comme par exemple un laiton, un alliage d'or 18ct ou un alliage de Pt950 ;
- du saphir.

L'insert 6 peut être un élément fonctionnel tel qu'une graduation ou un caractère alphanumérique, et/ou un élément de décor ou d'habillage, tel qu'un sigle de marque, une marque nominative, une dénomination commerciale, un revêtement d'aiguille, etc...Il est réalisé en une matière telle que par exemple une matière composite comportant une matrice organique, par exemple une matrice à base diméthacrylate, et des particules de céramique. La matière composite peut également comprendre une charge et/ou un additif ayant un rôle esthétique et/ou fonctionnel, par exemple une charge teintée, un matériau à émission lumineuse, etc..

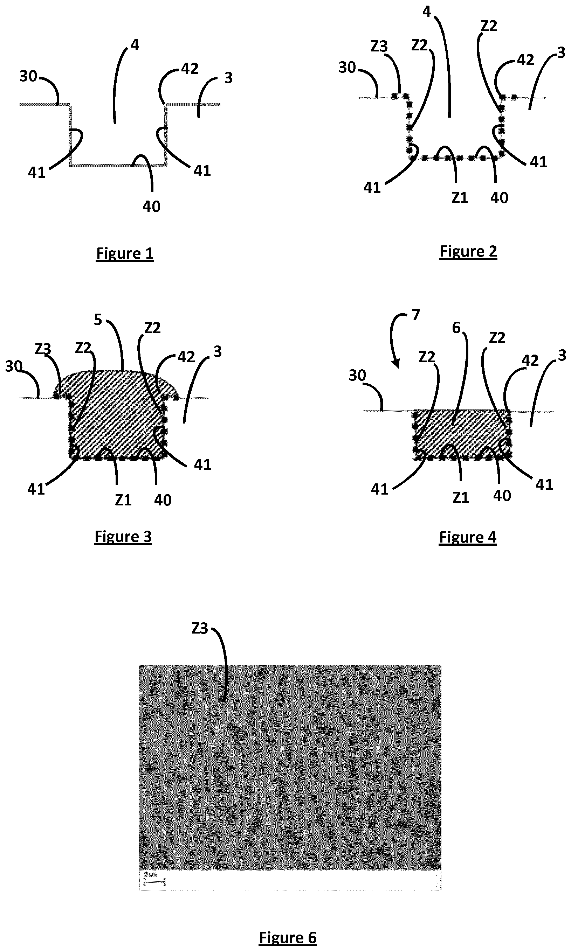

Le procédé de fabrication d'un composant horloger incrusté 1 va maintenant être décrit en référence aux figures 1 à 5.

Par souci de clarté, dans l'exemple particulier décrit ici, le composant horloger 1 comprend un seul insert 6. L'exemple particulier décrit ci-dessous concerne spécifiquement le cas d'un matériau de substrat en céramique.

Une étape initiale E0 comprend la formation d'un corps 3 de composant horloger, partiellement représenté sur la figure 1, à partir d'un matériau de substrat, par exemple une céramique à base de zircone ou d'alumine. Dans l'exemple de réalisation particulier décrit ici, un corps vert est d'abord réalisé par injection du matériau de substrat dans un moule. Par définition, on appelle ici « corps vert » un corps réalisé à partir d'un mélange de poudre céramique et de liant, à l'état « vert » (c'est-à-dire avant déliantage, lorsque le corps contient encore le liant). Une cavité borgne 4 est réalisée dans une face 30 du corps 3 directement lors de l'injection. En variante, on pourrait former la cavité 4 dans le corps 3 après injection, par exemple par gravure laser ou chimique ou bien par usinage. La cavité 4 a une profondeur comprise typiquement entre 0.1 et 0.6 mm. Elle comporte typiquement un fond 40 et des flancs, ou parois latérales, 41. Dans l'exemple représenté, le fond 40 est plat et parallèle à la face 30 et les parois 41 sont perpendiculaires au fond 40. Bien entendu, le fond 40 et/ou les parois latérales pourraient être inclinés ou non-plans (par exemple convexes). En particulier, les flancs 41 peuvent avoir un angle de dépouille, celui-ci présentant l'avantage de favoriser le traitement de surface qui sera décrit ultérieurement.

Le procédé comprend ensuite une étape E1 de traitement du corps injecté 3 comportant un déliantage, par exemple par un traitement thermique à l'air, puis un frittage, par exemple par un traitement thermique à haute température.

Bien entendu, d'autres techniques de formage, d'usinage et/ou de traitement pourraient être utilisées pour réaliser le corps 3 pourvu de la cavité 4.

L'étape de traitement E1 est suivie d'une étape E2 de traitement de surface destinée à former une ou plusieurs zones de texture d'accroche renforcée permettant d'augmenter l'adhérence de la matière composite de constitution de l'insert au corps 3.

Dans l'exemple de réalisation particulier décrit ici, on forme les zones suivantes de texture d'accroche renforcée :

- une zone Z1 s'étendant au fond de la cavité 4 ;
- des zones Z2 s'étendant sur les flancs, ou parois latérales, 41 de la cavité 4 et
- une zone Z3 s'étendant à l'extérieur de la cavité 4, sur la face 30 du corps 3, au bord 42 de la cavité 4.

Les différentes zones Z1, Z2 et Z3 sont ici continues, c'est-à-dire qu'elles se prolongent l'une l'autre.

La zone extérieure Z3 s'étend sur la face 30, le long du bord extérieur 42 de la cavité 4. Elle forme une bordure extérieure entourant la totalité de la cavité 4. Elle s'étend sur une largeur, le terme « largeur » désignant ici la dimension de la zone Z3 perpendiculairement au bord de la cavité 4, d'au moins 50 μm. Cette largeur peut toutefois varier le long du pourtour de la cavité 4. En variante, la zone extérieure Z3 peut présenter tout ou partie des caractéristiques suivantes :

- la zone extérieure Z3 peut s'étendre le long d'une partie du bord 42 de la cavité 4 ;
- la zone extérieure Z3 peut être composée de plusieurs portions discontinues positionnées autour de la cavité 4 ;
- la zone extérieure Z3 peut être légèrement écartée du bord 42 de la cavité 4 ;
- la zone extérieure Z3 est contenue dans une enveloppe séparée du bord extérieur de la cavité par une distance qui est strictement inférieure à la distance entre le bord extérieur de la cavité et le bord de la surface du composant ou à la distance entre le bord extérieur de la cavité et le bord extérieur d'une autre cavité voisine (la plus proche cavité voisine s'il en existe plusieurs), la plus petite de ces deux distances étant prise en compte le cas échéant.

En définitive, l'étendue de la zone Z3 ne recouvre pas la totalité de la surface du composant ;

- finalement, tout ou partie de la zone extérieure Z3 s'étend sur une largeur minimale à partir de la cavité 4, par exemple d'au moins 50 μm et/ou ne s'étend pas au-delà d'une largeur maximale à partir de la cavité, notamment inférieure ou égale à 100 μm, voire 200 μm.

La zone Z2 recouvre ici la totalité des parois latérales 41 de la cavité 4. En variante, la zone Z2 pourrait recouvrir partiellement les parois latérales 41.

La zone Z1 recouvre ici le fond 40 de la cavité 4. En variante, la zone Z1 pourrait s'étendre seulement sur une partie du fond 40.

On pourrait toutefois ne prévoir qu'une zone extérieure d'accroche renforcée, ou bien deux zones d'accroche renforcée, l'une extérieure et l'autre intérieure (la zone intérieure s'étendant par exemple au fond de la cavité ou sur les parois latérales de celles-ci).

La ou les zones de texture d'accroche renforcée sont ici réalisées par une modification de l'état de surface, autrement dit une texturation, de zones surfaciques du corps 3, qui induit une augmentation de la surface d'accroche. Par exemple, la texturation peut être réalisée au moyen de rayonnements laser à impulsion ultracourte, notamment à impulsion femtoseconde.

La texturation obtenue par laser à impulsion femtoseconde est peu profonde. La profondeur de relief de la texture d'accroche renforcée est par exemple comprise entre 0,2 et 20 microns. En outre, la texture d'accroche renforcée présente préférentiellement un écart moyen de rugosité $R_a$ compris entre 0,4 et 0,6 microns et une hauteur moyenne de profil $R_z$ comprise entre 2 et 4 microns, les paramètres de rugosité $R_a$ et $R_z$ étant tels que définis dans la norme internationale ISO 4287. Une texturation laser peu profonde permet de préserver la résistance mécanique du substrat (c'est-à-dire du corps 3). Sur la figure 6, on a représenté une vue d'une texture d'accroche renforcée agrandie au microscope électronique à balayage. L'utilisation de rayonnements laser à impulsion femtoseconde permet, d'une part, d'obtenir un état de surface ayant une texturation plus fine que celle que l'on obtiendrait par exemple par sablage et, d'autre part, de minimiser, voire d'éviter, les effets thermiques que l'on obtiendrait avec des rayonnements plus longs par exemple de l'ordre de la nanoseconde. En outre, la surface révélée, formant la surface totale d'adhérence obtenue, est beaucoup plus importante que celle que l'on obtiendrait par exemple par sablage.

A titre d'exemple purement illustratif, on peut utiliser un dispositif d'émission laser femtoseconde émettant dans l'infra-rouge, de longueur d'onde égale à 1030 nm, et délivrant une énergie moyenne supérieure à 15 μJ, par exemple égale à 40 μJ, sur la zone cible avec une durée d'impulsion inférieure à 450 femtosecondes. D'une manière plus générale, le dispositif laser utilisé est adapté pour délivrer une densité de puissance préférentiellement supérieure ou égale à $18 \times 10^6$ MW.cm$^{-2}$.

Afin de texturer une zone cible (Z1, Z2 et/ou Z3), on effectue un balayage de cette zone à l'aide d'un faisceau laser avec une vitesse de balayage selon une première direction dite « longitudinale » et un pas de balayage selon une deuxième direction dite « latérale » préférentiellement perpendiculaire ou sensiblement à la direction longitudinale, comme décrit dans la demande WO2013/135703. Lors du balayage, le faisceau laser balaie des lignes successives séparées par une distance L' (L' correspondant au pas de balayage), chaque ligne contenant des impacts laser successifs de forme globalement circulaire dont les centres respectifs sont séparés deux à deux par une distance L. Les distances L et L' ainsi que le rayon $R_{foc}$ du faisceau laser sur la zone cible permettent de déterminer un taux de recouvrement longitudinal O, comme décrit dans la demande WO2013/135703, par la relation suivante :

$$O = \frac{2\,R_{foc}^2\,Arcsin\left(\frac{h_1}{R_{foc}}\right) - h_1 L}{\pi\,R_{foc}^2} \text{ si } 2 \cdot R_{foc} \geq L, \text{ et } O = 0 \text{ si } 2 \cdot R_{foc} < L$$

avec $h_1 = \frac{1}{2}\sqrt{4\,R_{foc}^2 - L^2}$

Un taux de recouvrement latéral O' (c'est-à-dire selon la deuxième direction latérale) est défini de façon analogue, avec L' au lieu de L dans les relations ci-dessus.

Le taux de recouvrement longitudinal est avantageusement supérieur à 20% et strictement inférieur à 100%, autrement dit $20\% \leq O < 100\%$. Le taux de recouvrement latéral est strictement compris entre 0% et 100%, autrement dit $0\% < O' < 100\%$.

À titre d'exemple purement illustratif, la texture représentée sur la figure 6 a été obtenue par balayage simple avec un diamètre de faisceau laser moyen de 27,3 microns, un taux de recouvrement longitudinal de 54% et un taux de recouvrement latéral de 76,81.

La vitesse longitudinale de balayage laser peut être comprise entre 10 et 3500 mm/s, de préférence entre 500 et 1000 mm/s. Le pas latéral de balayage laser peut être compris entre 0,001 et 0,02 mm, de préférence entre 0,001 et 0,005 mm.

On peut effectuer sur la zone cible à traiter un balayage laser simple, aussi appelé balayage « hatch » ou « simple hatch », suivant une seule direction longitudinale, ou bien un balayage laser croisé, aussi appelé « cross-hatch », suivant une première direction longitudinale puis suivant une deuxième direction longitudinale, séparées l'une de l'autre par un angle supérieur ou égal à 10°, par exemple un angle égal ou sensiblement égal à 90°, comme décrit également dans la demande WO2013/135703.

Le procédé se poursuit par une étape E3 de dépôt de matière composite dans la cavité 4. Lors de cette étape E3, on remplit la cavité 4 avec la matière composite 5, sous la forme d'une suspension plus ou moins visqueuse, voire pâteuse, en faisant déborder la cavité 4 de manière à recouvrir au moins partiellement la zone extérieure Z3.

L'étape de dépôt E3 est suivie d'une étape de polymérisation E4. Cette étape E4 est par exemple réalisée par chauffage de la matière composite déposée sous pression modérée et sous atmosphère contrôlée.

Le procédé se poursuit par une étape de finition E5 lors de laquelle on élimine le surplus de matière composite extérieur à la cavité 4, c'est-à-dire la matière composite ayant débordé de la cavité 4, et on fait disparaître la zone extérieure Z3 de texture d'accroche renforcée. Cette étape E5 est par exemple réalisée par polissage, par reprise ou par usinage.

Dans la description qui précède, les zones d'adhésion renforcée (Z1, Z2 et/ou Z3) sont réalisées par laser à impulsion femtoseconde. De façon alternative, au lieu de modifier l'état de surface et la texture des zones Z1, Z2 et Z3 pour améliorer l'adhérence de l'insert, tout ou partie de ces zones Z1, Z2 et Z3 pourraient être recouverte d'une couche de liaison assurant un meilleur accrochage de la matière composite. Cette couche pourrait être une couche de liaison standard destinée à améliorer l'affinité entre matières ou une couche poreuse réalisée par exemple en déposant un mélange de poudre céramique et de carbone après injection du corps 3 et avant frittage. Une telle couche de liaison pourrait remplacer la texture d'accroche renforcée ou bien être ajoutée par-dessus celle-ci.

Dans une variante de réalisation, la cavité de logement de l'insert 6 forme un élément traversant, débouchant ou non. Cette cavité comprend par exemple un évidement supérieur, ménagé dans une face du composant, prolongé vers le bas, à l'intérieur du composant, par un ou plusieurs pied(s) creux latéraux ou verticaux, qui procurent une sécurité d'adhésion supplémentaire pour la matière de l'insert. Un lamage réalisé à l'extrémité du pied opposée à celle débouchant dans l'évidement supérieur ou un pied de forme tronconique (l'extrémité de plus petite section du tronc de cône débouchant dans l'évidement supérieur) permettraient de réduire le risque de délamination.

Dans d'autres variantes de réalisation, un matériau de substrat différent de la céramique peut être utilisé. Par exemple, on peut utiliser un alliage métallique, notamment un acier (par exemple l'acier 904L) ou un alliage cuivreux (par exemple un laiton), un alliage d'or 18ct ou encore un alliage de Pt950. On peut aussi utiliser un matériau obtenu par des techniques d'électroformage comme le Ni ou le NiP, ou des matériaux usinables par des techniques de micro-fabrication comme le silicium, le quartz ou le diamant. Bien que l'exemple particulier décrit ci-dessous concerne spécifiquement le cas d'un matériau de substrat en céramique, il peut être appliqué à tout matériau autre que la céramique, moyennant d'éventuelles adaptations relatives notamment à la technique de formation du corps pourvu de la cavité, aux conditions de texturation, à la nature et à la présence d'une couche de liaison, aux conditions de polymérisation ou encore aux conditions et/ou moyens de finition.

Suivant les matériaux et les conditions de traitement, on pourrait obtenir une coloration en fond de creusure qui modifie le rendu obtenu avec la matière composite. Par exemple, on pourrait obtenir une surface blanche en fond de creusure par un traitement laser approprié afin d'augmenter l'émission lumineuse d'une matière composite à émission lumineuse ou bien obtenir une surface blanche ou noire en fond de creusure par un traitement laser approprié afin de modifier la couleur perçue de la matière composite.

Il est aussi possible de mettre en œuvre le procédé selon l'invention en plusieurs fois, par exemple pour réaliser des séries d'inserts réalisées chacune avec une matière composite différente, ou pour réaliser un deuxième insert en une deuxième matière composite dans un premier insert en une première matière composite. Ceci permet de combiner des matières composites ayant des textures et/ou couleurs et/ou fonctionnalités différentes.

L'invention concerne aussi un composant horloger comportant un insert en matière composite , logé dans une cavité qui comporte une ou plusieurs zones d'adhésion renforcée s'étendant sur tout ou partie du fond de la cavité et sur au moins une partie du ou des flancs de la cavité, notamment le composant horloger 7 obtenu selon le procédé qui vient d'être décrit.

L'invention concerne également un composant horloger comportant un insert en matière composite, logé dans une cavité, et comportant au moins une surface d'adhésion renforcée de la matière composite s'étendant au moins partiellement à l'extérieur de la cavité. Il peut s'agir du composant fabriqué par le procédé précédemment décrit dans un état intermédiaire ou d'un composant pour lequel le surplus de matière composite ayant débordé hors de la cavité aurait été conservé pour procurer un effet esthétique souhaité.

L'invention concerne enfin une pièce d'horlogerie comportant un composant horloger tel que défini ci-dessus.

On pourrait également envisager d'appliquer, de façon plus générale, le procédé de fabrication qui vient d'être décrit à la fabrication d'un composant horloger réalisé en une première matière et pourvu d'un insert en une deuxième matière distincte de la première. Par exemple, l'insert pourrait être en matière plastique, en caoutchouc ou autre.

**Revendications**

1. Procédé de fabrication d'un composant horloger (7) pourvu d'un insert (6) en matière composite, comprenant les étapes successives suivantes :

    - une étape (E0) de formation d'un corps (3) pourvu d'une cavité (4) sur une face (30) dudit corps (3) ;
    - une étape de traitement (E2) lors de laquelle on forme au moins une zone d'adhésion renforcée (Z1, Z2, Z3) sur ledit corps (3) ;
    - une étape (E3) de dépôt de matière composite (5) lors de laquelle on remplit la cavité (4) et on recouvre la zone d'adhésion renforcée, avec ladite matière composite (5);
    - une étape de polymérisation de la matière composite (5) ;

    **caractérisé en ce que** ladite zone d'adhésion renforcée (Z3) est, au moins partiellement, extérieure à la cavité (4) et ne recouvre pas la totalité de la face (30) comprenant ladite cavité (4) du composant horloger (7).

2. Procédé selon la revendication précédente, **caractérisé en ce que** la zone d'adhésion renforcée (Z1, Z2, Z3) est obtenue par modification de l'état de surface (E1) d'une zone surfacique du corps (3) de manière à obtenir une zone de texture d'accroche renforcée.

3. Procédé selon l'une des revendications précédentes, **caractérisé en ce qu'**il comprend une étape de finition (E5), lors de laquelle on élimine un surplus de matière composite (5) et on supprime la zone d'adhésion renforcée (Z3) extérieure à la cavité (4).

4. Procédé selon l'une des revendications précédentes, **caractérisé en ce que**, lors de l'étape de traitement (E2), on forme au moins une zone d'adhésion renforcée (Z1, Z2) qui s'étend à l'intérieur de la cavité (4), notamment sur au moins une partie du fond de la cavité et/ou sur au moins une partie des parois latérales (41) de la cavité (4).

5. Procédé selon l'une des revendications précédentes, caractérisé en que la zone d'adhésion renforcée extérieure (Z3) est positionnée au bord (42) de la cavité (4).

6. Procédé selon l'une des revendications précédentes, **caractérisé en ce que** la zone d'adhésion renforcée extérieure entoure la totalité de la cavité (4).

7. Procédé selon l'une des revendications précédentes, **caractérisé en ce que** la zone d'adhésion renforcée extérieure (Z3) présente une largeur, perpendiculairement au bord de la cavité, d'au moins 50 $\mu$m.

8. Procédé selon l'une des revendications précédentes, **caractérisé en ce que** la zone d'adhésion renforcée extérieure (Z3) est contenue dans une enveloppe séparée du bord extérieur de la cavité par une distance qui est strictement inférieure à la distance entre le bord extérieur de la cavité et le bord de la surface du composant horloger ou à la distance entre le bord extérieur de la cavité et le bord extérieur d'une autre cavité voisine, notamment la plus proche cavité voisine, la plus petite de ces deux distances étant prise en compte le cas échéant.

9. Procédé selon l'une des revendications précédentes, **caractérisé en ce que** tout ou partie de la zone d'adhésion renforcée extérieure (Z3) s'étend sur une largeur maximale, perpendiculairement au bord de la cavité (4), inférieure ou égale à 100 $\mu$m, voire 200 $\mu$m.

10. Procédé selon l'une des revendications précédentes, **caractérisé en ce que** l'étape de traitement (E2) utilise des rayonnements laser femtoseconde.

11. Procédé selon la revendication précédente, **caractérisé en ce que**, lors de l'étape de traitement (E2), la zone à traiter est balayée par un faisceau laser avec une vitesse de balayage laser selon une direction longitudinale et un pas de balayage laser selon une direction latérale, la vitesse et le pas de balayage définissant respectivement un taux de recouvrement longitudinal supérieur à 20% et strictement inférieur à 100% et un taux de recouvrement latéral qui sont strictement compris entre 0% et 100%.

**12.** Procédé selon la revendication 10 ou 11, **caractérisé en ce qu'**on effectue sur la zone à traiter deux balayages laser respectivement définis par deux directions longitudinales de balayage distinctes qui sont séparées l'une de l'autre par un angle supérieur ou égal à 10°, notamment un angle égal ou sensiblement égal à 90°.

**13.** Procédé selon l'une des revendications 2 à 12, **caractérisé en ce que** la profondeur de relief de la texture d'accroche renforcée est comprise entre 0,2 et 20 microns.

**14.** Procédé selon l'une des revendications précédentes, **caractérisé en ce que** le corps (3) pourvu de ladite cavité (4) est obtenu par injection d'un matériau dans un moule.

**15.** Procédé selon l'une des revendications précédentes, **caractérisé en ce que** le corps (3) est constitué de l'un des matériaux du groupe comportant

   - une céramique, notamment une céramique à base de zircone ou d'alumine,
   - un alliage métallique, notamment un acier, un alliage cuivreux, un alliage d'or ou un alliage de Pt, et
   - du saphir.

**16.** Composant horloger comportant un insert (6) en matière composite, logé dans une cavité (4), laquelle comporte au moins une surface d'adhésion renforcée s'étendant à l'intérieur de la cavité, notamment sur au moins une partie du fond (40) de la cavité(4) et/ou sur une parie des flancs de la cavité (4), **caractérisé en ce qu'**il comporte en outre au moins une surface d'adhésion renforcée s'étendant à l'extérieur de la cavité (4) et ne recouvrant pas la totalité d'une face (30) comprenant ladite cavité du composant horloger.

**17.** Composant horloger selon la revendication précédente, **caractérisé en ce que** la surface d'adhésion renforcée :

   - est contenue dans une enveloppe séparée du bord extérieur de la cavité par une distance qui est strictement inférieure à la distance entre le bord extérieur de la cavité et le bord de la surface du composant ou à la distance entre le bord extérieur de la cavité et le bord extérieur d'une autre cavité voisine, notamment la plus proche cavité voisine, la plus petite de ces deux distances étant prise en compte le cas échéant, et/ou
   - s'étend sur une largeur minimale, perpendiculairement au bord de la cavité, d'au moins 50 $\mu$m, et/ou
   - s'étend sur une largeur maximale, perpendiculairement au bord de la cavité (4), inférieure ou égale à 100 $\mu$m, voire 200 $\mu$m.

**18.** Composant horloger selon la revendication 16 ou 17 **caractérisé en ce qu'**il est l'un des éléments du groupe comportant une lunette, une boîte, un élément de bracelet, une couronne, un cadran, un élément de mouvement horloger et une ébauche de mouvement horloger.

**19.** Pièce d'horlogerie comportant un composant horloger (7) selon l'une des revendications 16 à 18.

**Patentansprüche**

**1.** Verfahren zur Herstellung einer Uhrenkomponente (7), die mit einem Einsatz (6) aus einem Verbundmaterial versehen ist, umfassend die folgenden aufeinanderfolgenden Schritte:

   - einen Schritt (E0) der Ausbildung eines Körpers (3), der auf einer Seite (30) des Körpers (3) mit einem Hohlraum (4) versehen ist;
   - einen Behandlungsschritt (E2), bei dem zumindest eine Haftverstärkungszone (Z1, Z2, Z3) auf dem Körper (3) ausgebildet wird;
   - einen Schritt (E3) des Aufbringens von Verbundmaterial (5), bei dem der Hohlraum (4) gefüllt und die Haftverstärkungszone mit dem Verbundmaterial (5) bedeckt wird;
   - einen Schritt der Polymerisation des Verbundmaterials (5);

   **dadurch gekennzeichnet, dass** sich die Haftverstärkungszone (Z3) zumindest teilweise außerhalb des Hohlraums (4) befindet und nicht die gesamte Seite (30), die den Hohlraum (4) der Uhrenkomponente (7) umfasst, bedeckt.

2. Verfahren nach dem vorangehenden Anspruch, **dadurch gekennzeichnet, dass** die Haftverstärkungszone (Z1, Z2, Z3) durch Modifizierung des Oberflächenzustands (E1) einer Oberflächenzone des Körpers (3) erhalten wird, um eine Zone mit Haftverstärkungstextur zu erhalten.

3. Verfahren nach einem der vorangehenden Ansprüche, **dadurch gekennzeichnet, dass** es einen Endbearbeitungsschritt (E5) umfasst, bei dem ein Überschuss an Verbundmaterial (5) entfernt wird und die Haftverstärkungszone (Z3) außerhalb des Hohlraums (4) beseitigt wird.

4. Verfahren nach einem der vorangehenden Ansprüche, **dadurch gekennzeichnet, dass** bei dem Behandlungsschritt (E2) zumindest eine Haftverstärkungszone (Z1, Z2) ausgebildet wird, die sich innerhalb des Hohlraums (4), insbesondere über zumindest einen Teil des Bodens des Hohlraums und/oder über zumindest einen Teil der Seitenwände (41) des Hohlraums (4), erstreckt.

5. Verfahren nach einem der vorangehenden Ansprüche, **dadurch gekennzeichnet, dass** die äußere Haftverstärkungszone (Z3) am Rand (42) des Hohlraums (4) positioniert ist.

6. Verfahren nach einem der vorangehenden Ansprüche, **dadurch gekennzeichnet, dass** die äußere Haftverstärkungszone die Gesamtheit des Hohlraums (4) umgibt.

7. Verfahren nach einem der vorangehenden Ansprüche, **dadurch gekennzeichnet, dass** die äußere Haftverstärkungszone (Z3) eine Breite senkrecht zum Rand des Hohlraums von mindestens 50 $\mu$m aufweist.

8. Verfahren nach einem der vorangehenden Ansprüche, **dadurch gekennzeichnet, dass** die äußere Haftverstärkungszone (Z3) in einer Hülle enthalten ist, die vom Außenrand des Hohlraums durch einen Abstand getrennt ist, der strikt kleiner ist als der Abstand zwischen dem Außenrand des Hohlraums und dem Rand der Fläche der Uhrenkomponente oder als der Abstand zwischen dem Außenrand des Hohlraums und dem Außenrand eines anderen, benachbarten Hohlraums, insbesondere des nächstgelegenen benachbarten Hohlraums, wobei gegebenenfalls der kleinere der beiden Abstände berücksichtigt wird.

9. Verfahren nach einem der vorangehenden Ansprüche, **dadurch gekennzeichnet, dass** sich die Gesamtheit oder ein Teil der äußeren Haftverstärkungszone (Z3) über eine maximale Breite senkrecht zum Rand des Hohlraums (4) von weniger als oder gleich 100 $\mu$m oder sogar 200 $\mu$m erstreckt.

10. Verfahren nach einem der vorangehenden Ansprüche, **dadurch gekennzeichnet, dass** der Behandlungsschritt (E2) Femtosekundenlaserstrahlen verwendet.

11. Verfahren nach dem vorangehenden Anspruch, **dadurch gekennzeichnet, dass** bei dem Behandlungsschritt (E2) die zu behandelnde Zone durch einen Laserstrahl mit einer Laserabtastgeschwindigkeit in einer Längsrichtung und einem Laserabtastabstand in einer seitlichen Richtung abgetastet wird, wobei die Abtastgeschwindigkeit und der Abtastabstand eine Längsbedeckungsrate von mehr als 20 % und strikt weniger als 100 % bzw. eine seitliche Bedeckungsrate, die strikt zwischen 0 % und 100 % liegt, definieren.

12. Verfahren nach Anspruch 10 oder 11, **dadurch gekennzeichnet, dass** auf der zu behandelnden Zone zwei Laserabtastungen durchgeführt werden, die jeweils durch zwei unterschiedliche Längsabtastrichtungen definiert sind, die durch einen Winkel von mehr als oder gleich 10°, insbesondere einen Winkel gleich oder im Wesentlichen gleich 90°, voneinander getrennt sind.

13. Verfahren nach einem der Ansprüche 2 bis 12, **dadurch gekennzeichnet, dass** die Relieftiefe der Haftverstärkungstextur 0,2 bis 20 Mikrometer beträgt.

14. Verfahren nach einem der vorangehenden Ansprüche, **dadurch gekennzeichnet, dass** der mit dem Hohlraum (4) versehene Körper (3) durch Einspritzen eines Materials in eine Form erhalten wird.

15. Verfahren nach einem der vorangehenden Ansprüche, **dadurch gekennzeichnet, dass** der Körper (3) aus einem der Materialien der Gruppe besteht, die Folgendes umfasst:

- eine Keramik, insbesondere eine Keramik auf Zirkonoxid- oder Aluminiumbasis,
- eine Metalllegierung, insbesondere einen Stahl, eine Kupferlegierung, eine Goldlegierung oder eine Pt-Legierung und
- Saphir.

**16.** Uhrenkomponente, umfassend einen Einsatz (6) aus Verbundmaterial, der in einem Hohlraum (4) untergebracht ist, der zumindest eine Haftverstärkungsfläche aufweist, die sich innerhalb des Hohlraums, insbesondere über zumindest einen Teil des Bodens (40) des Hohlraums (4) und/oder über einen Teil der Seiten des Hohlraums (4) erstreckt, **dadurch gekennzeichnet, dass** sie ferner zumindest eine Haftverstärkungsfläche aufweist, die sich außerhalb des Hohlraums (4) erstreckt und nicht die Gesamtheit einer Seite (30), die den Hohlraum der Uhrenkomponente umfasst, bedeckt.

**17.** Uhrenkomponente nach dem vorangehenden Anspruch, **dadurch gekennzeichnet, dass** die Haftverstärkungsfläche:

- in einer Hülle enthalten ist, die vom Außenrand des Hohlraums durch einen Abstand getrennt ist, der strikt kleiner ist als der Abstand zwischen dem Außenrand des Hohlraums und dem Rand der Fläche der Komponente oder als der Abstand zwischen dem Außenrand des Hohlraums und dem Außenrand eines anderen, benachbarten Hohlraums, insbesondere des nächstgelegenen benachbarten Hohlraums, wobei gegebenenfalls der kleinere der beiden Abstände berücksichtigt wird, und/oder
- sich über eine minimale Breite senkrecht zum Rand des Hohlraums von mindestens 50 $\mu$m erstreckt und/oder
- sich über eine maximale Breite senkrecht zum Rand des Hohlraums (4) von weniger als oder gleich 100 $\mu$m oder sogar 200 $\mu$m erstreckt.

**18.** Uhrenkomponente nach Anspruch 16 oder 17, **dadurch gekennzeichnet, dass** sie eines der Elemente der Gruppe ist, die eine Lünette, ein Gehäuse, ein Armbandelement, eine Krone, ein Zifferblatt, ein Uhrwerkselement und einen Uhrwerksrohling umfasst.

**19.** Zeitmessgerät, umfassend eine Uhrenkomponente (7) nach einem der Ansprüche 16 bis 18.

## Claims

**1.** A method of producing a timepiece component (7) provided with an insert (6) made of a composite material, comprising the following successive steps:

- a step (E0) of forming a body (3) provided with a cavity (4) on one face (30) of said body (3);
- a treatment step (E2), in the course of which at least one reinforced adhesion zone (Z1, Z2, Z3) is formed on said body (3);
- a step (E3) of depositing composite material (5), in the course of which the cavity (4) is filled and the reinforced adhesion zone is covered with said composite material (5);
- a step of polymerization of the composite material (5);

**characterized in that** said reinforced adhesion zone (Z3) is situated, at least partially, outside the cavity (4) and does not cover the totality of the face (30) comprising said cavity (4) of the timepiece component (7).

**2.** The method as claimed in the preceding claim, **characterized in that** the reinforced adhesion zone (Z1, Z2, Z3) is obtained by modification of the surface state (E1) of a surface zone of the body (3) in such a way as to obtain a zone having a reinforced attachment texture.

**3.** The method as claimed in one of the preceding claims, **characterized in that** it comprises a finishing step (E5), in the course of which any surplus of composite material (5) is eliminated and the reinforced adhesion zone (Z3) external to the cavity (4) is suppressed.

**4.** The method as claimed in one of the preceding claims, **characterized in that**, in the course of the treatment step (E2), at least one reinforced adhesion zone (Z1, Z2) is formed, which zone extends to the interior of the cavity (4), in particular on at least one part of the bottom of the cavity and/or on at least one part of the lateral walls (41) of the cavity (4).

**5.** The method as claimed in one of the preceding claims, **characterized in that** the external reinforced adhesion zone (Z3) is positioned on the edge (42) of the cavity (4).

6. The method as claimed in one of the preceding claims, **characterized in that** the external reinforced adhesion zone surrounds the totality of the cavity (4).

7. The method as claimed in one of the preceding claims, **characterized in that** the external reinforced adhesion zone (Z3) exhibits a width, perpendicular to the edge of the cavity, of at least 50 $\mu$m.

8. The method as claimed in one of the preceding claims, **characterized in that** the external reinforced adhesion zone (Z3) is contained within an envelope that is separated from the external edge of the cavity by a distance which is strictly less than the distance between the external edge of the cavity and the edge of the surface of the timepiece component, or less than the distance between the external edge of the cavity and the external edge of another neighboring cavity, in particular the closest neighboring cavity, the smaller of said two distances being taken into consideration, as appropriate.

9. The method as claimed in one of the preceding claims, **characterized in that** all or part of the external reinforced adhesion zone (Z3) extends over a maximum width, perpendicular to the edge of the cavity (4), of less than or equal to 100 $\mu$m, or 200 $\mu$m.

10. The method as claimed in one of the preceding claims, **characterized in that** the treatment step (E2) utilizes femtosecond laser radiation.

11. The method as claimed in the preceding claim, **characterized in that**, in the course of the treatment step (E2), the zone to be treated is scanned by a laser beam having a laser scanning speed in a longitudinal direction and having a laser scanning step width in a lateral direction, the speed and the step width defining respectively a longitudinal overlapping rate greater than 20% and strictly less than 100% and a lateral overlapping rate which is strictly comprised between 0% and 100%.

12. The method as claimed in claim 10 or 11, **characterized in that** two laser scans are performed on the zone to be treated defined respectively by two distinct longitudinal directions of scanning which are separated one from the other by an angle greater than or equal to 10°, in particular an angle equal to or substantially equal to 90°.

13. The method as claimed in one of claims 2 to 12, **characterized in that** the depth of relief of the reinforced attachment texture is between 0.2 and 20 microns.

14. The method as claimed in one of the preceding claims, **characterized in that** the body (3) provided with said cavity (4) is obtained by injection of a material into a mold.

15. The method as claimed in one of the preceding claims, **characterized in that** the body (3) is constituted by one of the materials of the group including

   - a ceramic, in particular a zircon-based or aluminum-based ceramic,
   - a metal alloy, in particular a steel, a copper alloy, an alloy of gold or an alloy of Pt, and
   - sapphire.

16. A timepiece component including an insert (6) made of a composite material, engaged in a cavity (4), which includes at least one reinforced adhesion surface of the composite material extending to the interior of the cavity (4), in particular on at least one part of the bottom (40) of the cavity (4) and/or on at least one part of the flanks of the cavity (4), **characterized in that** it also comprises at least one reinforced adhesion surface extending to the exterior of the cavity, and not covering the totality of a face (30) comprising said cavity (4) of the timepiece component (7).

17. The timepiece component as claimed in the preceding claim, **characterized in that** the reinforced adhesion surface:

   - is contained within an envelope separated from the external edge of the cavity by a distance which is strictly less than the distance between the external edge of the cavity and the edge of the surface of the timepiece component, or less than the distance between the external edge of the cavity and the external edge of another neighboring cavity, in particular the closest neighboring cavity, the smaller of said two distances being taken into consideration, as appropriate, and/or

- extends over a minimum width, perpendicular to the edge of the cavity, of at least 50 $\mu$m, and/or
- extends over a maximum width, perpendicular to the edge of the cavity (4), of less than or equal to 100 $\mu$m, or 200 $\mu$m.

18. The timepiece component as claimed in claim 16 or 17, **characterized in that** it is one of the elements of the group including a bezel, a case, a bracelet element, a crown, a dial, an element of a timepiece movement and a blank for a timepiece movement.

19. A timepiece including a timepiece component (7) as claimed in one of claims 16 to 18.

Figure 1

Figure 2

Figure 3

Figure 4

Figure 6

**Figure 5**

E0

TRT — E1

E2

E3

PLM — E4

E5

**Figure 7**

6

7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013178412 A1

- WO 2013135703 A

**Littérature non-brevet citée dans la description**

- **J. ZEHETNER ; S. STROJ ; G. ZANGHELLINI.** Facilitating the fabrication of micron scale composite polymer inlays in ceramics substrates using femtosecond pulse laser ablation technique. *12th Conférence on Laser Ablation,* 06 Octobre 2013